# FASCICULE DE BREVET EUROPEEN

(11) **EP 3 041 729 B1**
(45) Date de publication et mention de la délivrance du brevet: **30.01.2019**
(21) Numéro de dépôt: 14777717.1
(22) Date de dépôt: 05.09.2014
(51) Int. Cl.: B62D 25/20, B62D 27/02

(54) **PLANCHER DE VÉHICULE AUTOMOBILE AVEC PEAU SUPÉRIEURE DE RENFORT ET OUVERTURE D'ACCESSIBILITÉ AUX CORPS CREUX**
KRAFTFAHRZEUGBODEN MIT EINER OBEREN VERSTÄRKUNGSVERKLEIDUNG UND EINER ZUGANGSÖFFNUNG ZUM ZUGRIFF AUF HOHLKÖRPER
MOTOR VEHICLE FLOOR HAVING AN UPPER REINFORCING SKIN AND AN ACCESSIBILITY OPENING FOR ACCESSING HOLLOW BODIES

(30) Priorité: 06.09.2013 FR 1358605
(43) Date de publication de la demande: 13.07.2016
(73) Titulaire: Compagnie Plastic Omnium, 69000 Lyon (FR)
(72) Inventeur: STABLO, Frédéric, F-38390 Porcieu Amblagnieu (FR); CHERON, Hugues, F-01800 Meximieux (FR)
(74) Mandataire: Remy, Vincent Noel Paul
(86) Numéro de dépôt international: PCT/FR2014/052201
(87) Numéro de publication internationale: WO 2015/033075

(56) Documents cités:
- EP-A1- 2 508 414
- DE-A1- 10 044 740
- FR-A1- 2 955 077
- JP-A- 2002 067 819
- FRUTIGER R L ET AL: "COMPOSITE FLOORPAN", AUTOMOTIVE ENGINEERING, SOCIETY OF AUTOMOTIVE ENGINEERS. WARRENDALE, US, vol. 101, no. 2, 1 février 1993 (1993-02-01), pages 39-43, XP000349641, ISSN: 0098-2571

## Description

L'invention concerne un plancher structurel pour un véhicule automobile.

On connaît dans l'état de la technique un plancher de véhicule destiné à être fixé de manière à une caisse en blanc de véhicule de façon à constituer une barrière étanche entre une zone intérieure du véhicule et une zone extérieure au véhicule. On entend par plancher la pièce délimitant le fond de l'habitacle.

Pour être structurelle, la pièce « plancher » est solidarisée à la caisse en blanc du véhicule et participe à sa rigidité. Elle peut être réalisée en tôle d'acier et est alors soudée aux traverses de la caisse en blanc, ou en matière plastique, auquel cas elle est solidement collée aux traverses de la caisse en blanc.

Il est bien connu de renforcer et rigidifier le plancher, en y intégrant notamment des nervures ou des bossages.

Pour renforcer encore davantage le plancher, il est connu dans l'état de la technique, notamment du brevet EP 2146 890, de réaliser un plancher en deux parties superposées : une peau inférieure et une peau supérieure fixée l'une à l'autre. La superposition des deux peaux de façon jointive constitue un renfort structurel local à l'arrachement pour le plancher..

Si les deux peaux sont espacées, de façon à ménager des corps creux, il en résulte un effet de caisson mécanique contribuant à la rigidité et au comportement structurel de l'ensemble.

Les constructeurs automobiles recherchent en permanence des volumes libres du véhicule aptes à accueillir différents éléments fonctionnels.

Ainsi, il est connu de positionner à l'intérieur de ces corps creux des équipements tels que des réservoirs à carburant, des batteries, des lignes de câblage ou d'échappement.

Cependant, il est aussi nécessaire pendant l'assemblage du véhicule ou pendant sa période d'utilisation, de pouvoir, par exemple, remplacer certains composants, d'effectuer des réparations ou de la maintenance, notamment pour les batteries, ou les moyens de fixation des équipements. Par exemple, lors des étapes de cataphorèse ou d'assemblage, il peut arriver que les moyens de fixation intégrés à l'une des peaux du plancher soient endommagés.

Or, il est fréquent, tant pour des raisons de solidité de la fixation entre les deux peaux que pour des contraintes de compatibilité industrielle avec la ligne d'assemblage du véhicule, que les deux peaux soient collées définitivement entre elles, et ce dès le début de la gamme d'assemblage du véhicule. Il n'est alors plus toujours possible d'accéder correctement au volume intérieur des corps creux ou aux éléments situés sur ou dans ces corps creux.
Le document DE 100 44 740 A1 décrit un plancher de véhicule automobile selon le préambule de la revendication 1.

Il existe donc un besoin de pouvoir modifier les équipements techniques introduits dans les corps creux. En particulier, il existe un besoin pour pouvoir accéder au moyen de fixation d'équipement tel qu'un siège.

A cet effet, l'invention a pour objet un plancher constitué de deux peaux superposées, fixées entre elles, permettant d'accéder aux moyens de fixation d'équipement (batterie, moyen de renfort, ceinture, siège...) fixés sur ce plancher et/ou aux équipements eux-mêmes. Pour y parvenir, le plancher selon l'invention comporte au moins un corps creux muni d'au moins une ouverture positionnée et dimensionnée de façon à permettre le passage de ce moyen de fixation (6) et/ou de l'équipement à travers l'ouverture (7).

Ainsi, l'objet de l'invention concerne un plancher (1) de véhicule automobile comportant une peau inférieure (2) et une peau supérieure (3), les peaux inférieure (2) et supérieure (3) étant fixées entre elles de façon à ménager, dans au moins une partie (4) du plancher, au moins un corps creux (5) entre lesdites peaux. Le corps creux comporte au moins un élément technique (6) et/ou au moins un moyen de fixation (7) de l'élément technique (6) ou d'un équipement intérieur de véhicule. De plus, le corps creux (5) est muni d'au moins une ouverture (8) positionnée et dimensionnée de façon à permettre le passage du moyen de fixation (7) et/ou de l'élément technique (6) à travers l'ouverture.

L'ouverture (8) peut être portée par la peau supérieure (3), ou par la peau inférieure (2).

De préférence, l'ouverture (8) est munie d'un élément de fermeture (9) pour renforcer mécaniquement la peau (2, 3) portant l'ouverture (8). Cet élément de fermeture (9) peut être fixé à la peau (2, 3) portant l'ouverture (8) par au moins l'un des moyens suivants : collage, rivetage.

Selon l'invention, la peau inférieure (2) peut être réalisée en matériau composite, la peau supérieure (3) peut être réalisée en matériau composite ou en matériau métallique, et l'élément de fermeture (9) peut être réalisé dans la même matière que la peau (2, 3) portant l'ouverture.

Selon un mode de réalisation, le corps creux (5) est situé le long d'un bord latéral (11) du plancher (1). Selon l'invention, le plancher comporte un élément longitudinal formant un tunnel (10) positionné au centre du plancher, le tunnel (10) comportant un second moyen de fixation (7') au niveau duquel le tunnel (10) est dépourvu de corps creux (5). Selon une variante, le corps creux (5) comporte deux moyens de fixation (7) de l'équipement intérieur de véhicule, et le tunnel (10) comporte deux moyens de fixation (7') de l'équipement intérieur de véhicule.

Selon un autre mode de réalisation, le plancher comporte deux corps creux (5), chaque corps creux (5) supportant au moins un moyen de fixation (7).

Selon l'invention, la peau supérieure (3) peut contribuer avec la peau inférieure (2) au renfort structurel dudit plancher (1).

Enfin, selon l'invention, l'équipement intérieur peut être un siège ou une attache de ceinture, et l'élément technique (6) peut être un moyen de renfort structurel, un absorbeur de choc ou un pack de batterie.

L'invention sera mieux comprise à la lecture des figures annexées, qui sont fournies à titre d'exemples et ne présentent aucun caractère limitatif, dans lesquelles :
- La figure 1 illustre un plancher selon l'invention.
- La figure 2 illustre une ouverture (8) réalisée dans la peau supérieure (3).
- La figure 3 illustre la mise ne place d'un moyen de renfort (6) au niveau du corps creux, grâce à l'ouverture (8).
- La figure 4.1 illustre une ouverture (8) et un élément de fermeture (9) pour renforcer mécaniquement la peau (2, 3) portant l'ouverture (8).
- La figure 4.2 illustre une ouverture (8) obturée par un élément de fermeture (9).
- La figure 5 illustre un mode de réalisation B, dans lequel le plancher (1) comporte un tunnel (10) positionné au centre du plancher (1),le tunnel (10) étant dépourvu de corps creux (5) au niveau de moyens de fixation (7').

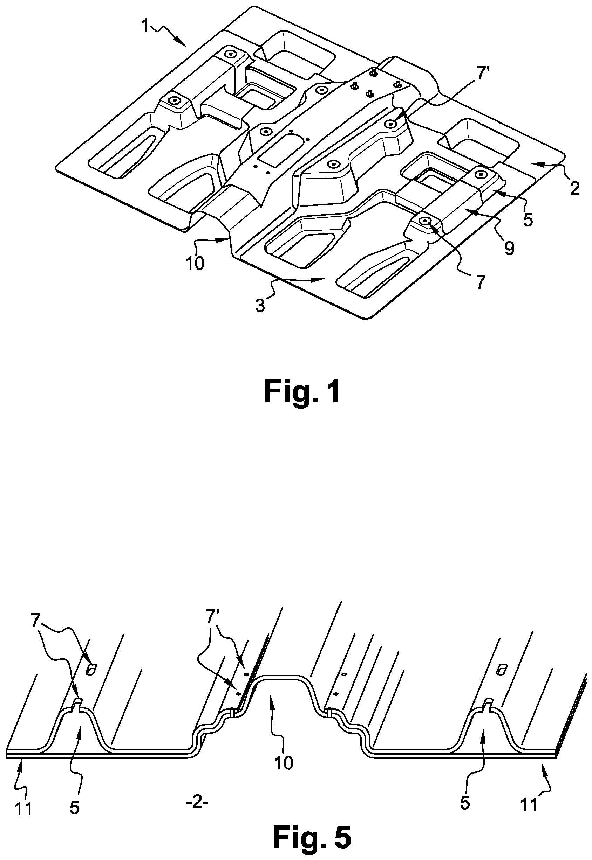

On se réfère désormais à la figure 1. Le plancher (1) de véhicule automobile selon l'invention, comporte une peau inférieure (2) et une peau supérieure (3). Cette dernière contribue avec la peau inférieure (2) au renfort structurel du plancher (1). Les peaux inférieure (2) et supérieure (3) sont fixées entre elles de façon à ménager, dans au moins une partie (4) du plancher, au moins un corps creux (5) entre lesdites peaux.

Le corps creux (5) comporte (au niveau des peaux ou dans le volume défini par ce corps creux) au moins un élément technique (6) et/ou un moyen de fixation (7) de l'élément technique ou d'un équipement intérieur de véhicule.

On appelle équipement intérieur de véhicule un dispositif destiné à être installé dans l'habitacle du véhicule, fixé sur le plancher (1). Il peut s'agir par exemple d'une attache de ceinture ou de sièges.

On appelle élément technique (6) un dispositif fonctionnel destiné à être installé dans le plancher (1). Il peut s'agir par exemple d'un moyen de renfort structurel, d'un absorbeur de choc (ou « padding ») ou d'un pack de batterie.

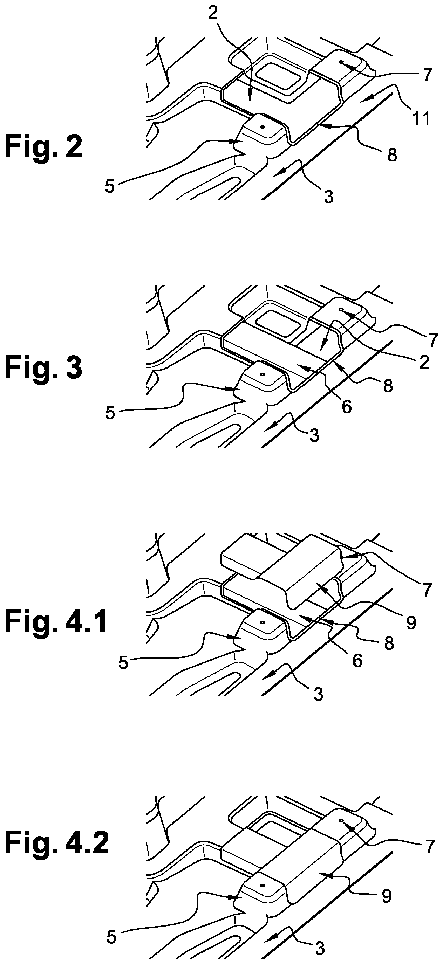

Le corps creux est muni d'au moins une ouverture (8) positionnée et dimensionnée de façon à permettre le passage de l'élément technique (6) et/ou du moyen de fixation (7) à travers l'ouverture (8). La figure 2 illustre une telle ouverture (8) réalisée dans la peau supérieure (3).

Lorsqu'il s'agit d'accéder, de retirer ou de changer un moyen de fixation (7), l'ouverture (8) sera de préférence de taille réduite, de façon à conserver la fonction de contribution au renfort structurel du plancher (1). L'homme du métier sait définir la dimension de cette ouverture (8) en relation avec la fonction souhaitée.

Par exemple, le moyen de fixation (7) peut être un écrou ou un ensemble d'écrou pouvant accueillir une vis pour fixer l'équipement intérieur du véhicule ou l'élément technique (6). L'homme du métier pourra aisément déterminer la taille et la position de l'ouverture permettant d'accéder, de retirer ou de changer ce moyen. Si l'ouverture (8) est destinée à insérer, assembler, fixer, changer, réparer, ou accéder à un élément technique, l'homme du métier adaptera la dimension de l'ouverture, et sa position. La figure 3 illustre ce dernier mode de réalisation, dans lequel l'ouverture (8) a été conçue pour permettre de changer un élément technique (6).

L'ouverture (8) peut être portée par la peau supérieure (3) comme illustré sur la figure 2. L'accès à l'intérieur du corps creux (5) est alors réalisé par l'intérieur du véhicule. L'ouverture (8) peut être également portée par la peau inférieure (2). L'accès à l'intérieur du corps creux (5) est alors réalisé par l'extérieur, en dessous du véhicule.

Bien sûr, le plancher (1) selon l'invention peut comporter plusieurs ouvertures (8), chacune pouvant être portée par l'une ou l'autre des peaux (2, 3), et dont la forme, position et dimensions sont adaptées aux moyens de fixations (7) et/ou aux éléments techniques (6) auxquels elle donne accès.

L'existence d'une ouverture (8) sur une pièce destinée à renforcer structurellement le plancher (1) peut affaiblir cette fonction. De ce fait, il est préférable de munir l'ouverture (8) d'un élément de fermeture (9) pour renforcer mécaniquement la peau (2, 3) portant l'ouverture (8), comme illustré sur les figures 4.1 et 4.2.

Cet élément de fermeture (9), tel qu'une trappe ou une porte, est fixé à la peau (2, 3) portant l'ouverture (8) par au moins l'un des moyens suivants : collage, rivetage,... Une fixation continue est préférable pour renforcer structurellement la peau (2, 4) au niveau de l'ouverture (8).

De façon à ne pas alourdir le plancher (1) tout en conservant une bonne résistance mécanique, on choisit de préférence une peau inférieure (2) en matériau composite. On peut par exemple utiliser un matériau composite comprenant un mélange d'au moins des fibres de renfort et d'une résine polymère du type moulé en feuille (SMC). Par exemple, ce matériau composite du type SMC (acronyme anglais pour "Sheet Moulding Compound") comprend un mélange de fibres de verre et d'une résine polymère thermodurcissable telle que du polyester. Le mélange comprend en général également des charges minérales en relativement grandes proportions afin notamment de limiter la consommation de résine polyester.

Quant à la peau supérieure (3), elle est de préférence réalisée en matériau composite ou en matériau métallique.

L'élément de fermeture (9) est lui réalisé de préférence dans la même matière que la peau (2, 3) portant l'ouverture.

Selon l'équipement intérieur à fixer, le nombre et la position des moyens de fixations sont adaptés.

Ainsi, selon un mode de réalisation A, le corps creux (5) est situé le long d'un bord latéral (11) du plancher, comme illustré sur les figures 2 à 4.2. Ceci permet la fixation d'un moyen de renfort (« padding » en anglais) ou d'un pack de batterie. Il peut également servir pour l'une des fixations d'un siège.

Selon un mode de réalisation B, le plancher (1) comporte un élément longitudinal formant un tunnel (10) et positionné au centre du plancher. Ce type de tunnel (10) est généralement utilisé pour y positionner le pot d'échappement par exemple. Selon ce mode réalisation, ce tunnel (10) comporte un second moyen de fixation (7'), le premier moyen de fixation (7) étant positionné au niveau du corps creux (5).

Selon ce mode réalisation, le tunnel (10) est dépourvu de corps creux (5) au niveau des moyens de fixation (7'), c'est-à-dire que les peaux supérieure (3) et inférieure (2) sont jointives à ce niveau, comme illustré sur la figure 5. L'absence de corps creux rend le moyen de fixation (7') directement accessible par la peau inférieure (2), sous le véhicule. Ce type de fixation et d'accessibilité est illustré sur la figure5.

Ainsi, selon ce mode de réalisation, il est possible de fixer un équipement intérieur simultanément en plusieurs endroits du plancher, les fixations de cet équipement se répartissant entre le tunnel (10) et le corps creux (5), de préférence latéral, comme illustré sur la figure 5.

Selon un mode de réalisation C, une variante du mode de réalisation B, le corps creux (5) comporte deux moyens de fixation (7) d'un équipement intérieur de véhicule par exemple, et le tunnel (10) comporte deux moyens de fixation (7') de cet équipement intérieur. Ce mode de réalisation est particulièrement bien adapté pour la fixation d'un siège sur le plancher.

L'invention a été décrite à titre purement indicatif et nullement limitatif, et il va de soi que de nombreuses modifications peuvent être apportées à ses détails. Par exemple, l'invention concerne également un plancher (1) comportant plusieurs corps creux (5) supportant un ou plusieurs moyens de fixation (7) pour un même élément technique ou équipement intérieur (6).

## Revendications

1. Plancher (1) de véhicule automobile comportant une peau inférieure (2) et une peau supérieure (3), les peaux inférieure (2) et supérieure (3) étant fixées entre elles de façon à ménager, dans au moins une partie (4) du plancher, au moins un corps creux (5) entre lesdites peaux, ledit plancher comportant un élément longitudinal formant un tunnel (10) positionné au centre du plancher, ledit corps creux comportant au moins un élément technique (6) et/ou au moins un moyen de fixation (7) dudit élément technique (6) ou d'un équipement intérieur de véhicule, ledit corps creux (5) étant muni d'au moins une ouverture (8) positionnée et dimensionnée de façon à permettre le passage dudit moyen de fixation (7) et/ou dudit élément technique (6) à travers l'ouverture, **caractérisé en ce que** ledit tunnel (10) comporte un second moyen de fixation (7') au niveau duquel le tunnel (10) est dépourvu de corps creux (5).

2. Plancher selon la revendication 1, dans lequel ladite ouverture (8) est portée par ladite peau supérieure (3).

3. Plancher selon la revendication 1, dans lequel ladite ouverture (8) est portée par ladite peau inférieure (2).

4. Plancher selon l'une des revendications 2 et 3, dans lequel ladite ouverture (8) est munie d'un élément de fermeture (9) pour renforcer mécaniquement la peau (2, 3) portant l'ouverture (8).

5. Plancher selon la revendication 4, dans lequel ledit élément de fermeture (9) est fixé à la peau (2, 3) portant l'ouverture (8) par au moins l'un des moyens suivants : collage, rivetage.

6. Plancher selon l'une des revendications précédentes, dans lequel ladite peau inférieure (2) est réalisée en matériau composite.

7. Plancher selon l'une des revendications précédentes, dans lequel ladite peau supérieure (3) est réalisée en matériau composite ou en matériau métallique.

8. Plancher selon l'une des revendications 4 à 7, dans lequel ledit élément de fermeture (9) est réalisé dans la même matière que la peau (2, 3) portant l'ouverture.

9. Plancher selon l'une des revendications précédentes, dans lequel ledit corps creux (5) est situé le long d'un bord latéral dudit plancher (1).

10. Plancher selon l'une des revendications précédentes, dans lequel le corps creux (5) comporte deux moyens de fixation (7) dudit équipement intérieur de véhicule, et le tunnel (10) comporte deux moyens de fixation (7') dudit équipement intérieur de véhicule.

11. Plancher selon l'une des revendications précédentes, dans lequel le plancher comporte deux corps creux (5), chaque corps creux (5) supportant au moins un moyen de fixation(7).

12. Plancher selon l'une des revendications précédentes, dans lequel la peau supérieure (3) contribue avec la peau inférieure (2) au renfort structurel dudit plancher (1).

13. Plancher selon l'une des revendications précédentes, dans lequel ledit équipement intérieur est un siège ou une attache de ceinture.

14. Plancher selon l'une des revendications précédentes, dans lequel ledit élément technique (6) est un moyen de renfort structurel, un absorbeur de choc ou un pack de batterie.

## Patentansprüche

1. Boden (1) für Kraftfahrzeug mit einer unteren Verkleidung (2) und einer oberen Verkleidung (3), wobei die untere Verkleidung (2) und die obere Verkleidung (3) so aneinander befestigt sind, dass sie, in wenigstens einem Teil (4) des Bodens, mindestens einen Hohlkörper (5) zwischen den Verkleidungen ausbilden, wobei der Boden ein längsgerichtetes Element aufweist, das einen Tunnel (10) bildet und in der Mitte des Bodens positioniert ist, wobei der Hohlkörper wenigstens ein technisches Element (6) und/oder wenigstens ein Mittel (7) zur Befestigung des technischen Elements (6) oder einer Fahrzeuginneneinrichtung aufweist, wobei der Hohlkörper (5) mit wenigstens einer Öffnung (8) versehen ist, die so positioniert und dimensioniert ist, dass sie den Durchtritt des Befestigungsmittels (7) und/oder des technischen Elements (6) durch die Öffnung hindurch gestattet, **dadurch gekennzeichnet, dass** der Tunnel (10) ein zweites Befestigungsmittel (7') aufweist, in dessen Bereich der Tunnel (10) keinen Hohlkörper (5) aufweist.

2. Boden nach Anspruch 1, wobei die Öffnung (8) von der oberen Verkleidung (3) getragen wird.

3. Boden nach Anspruch 1, wobei die Öffnung (8) von der unteren Verkleidung (2) getragen wird.

4. Boden nach einem der Ansprüche 2 und 3, wobei die Öffnung (8) mit einem Schließelement (9) versehen ist, um die die Öffnung (8) tragende Verkleidung (2, 3) mechanisch zu verstärken.

5. Boden nach Anspruch 4, wobei das Schließelement (9) an der die Öffnung (8) tragenden Verkleidung (2, 3) durch wenigstens eines der folgenden Mittel befestigt ist: Verkleben, Vernieten.

6. Boden nach einem der vorhergehenden Ansprüche, wobei die untere Verkleidung (2) aus Verbundwerkstoff ist.

7. Boden nach einem der vorhergehenden Ansprüche, wobei die obere Verkleidung (3) aus Verbundwerkstoff oder aus metallischem Werkstoff ist.

8. Boden nach einem der Ansprüche 4 bis 7, wobei das Schließelement (9) aus dem gleichen Material wie die die Öffnung (8) tragende Verkleidung (2, 3) ist.

9. Boden nach einem der vorhergehenden Ansprüche, wobei der Hohlkörper (5) sich entlang eines seitlichen Rands des Bodens (1) befindet.

10. Boden nach einem der vorhergehenden Ansprüche, wobei der Hohlkörper (5) zwei Mittel (7) zur Befestigung der Fahrzeuginneneinrichtung aufweist und der Tunnel (10) zwei Mittel (7') zur Befestigung der Fahrzeuginneneinrichtung aufweist.

11. Boden nach einem der vorhergehenden Ansprüche, wobei der Boden zwei Hohlkörper (5) aufweist, wobei jeder Hohlkörper (5) wenigstens ein Befestigungsmittel (7) haltert.

12. Boden nach einem der vorhergehenden Ansprüche, wobei die obere Verkleidung (3) mit der unteren Verkleidung (2) zur strukturellen Verstärkung des Bodens (1) beiträgt.

13. Boden nach einem der vorhergehenden Ansprüche, wobei die Fahrzeuginneneinrichtung ein Sitz oder eine Gurtverbindung ist.

14. Boden nach einem der vorhergehenden Ansprüche, wobei das technische Element (6) ein strukturelles Verstärkungsmittel, ein Aufpralldämpfer oder ein Batteriepack ist.

## Claims

1. Motor vehicle floor comprising a lower skin (2) and an upper skin (3), the lower skin (2) and upper skin (3) being fixed together so as to form, in at least a part (4) of the floor, at least one hollow body (5) between said skins, said floor comprising a longitudinal element forming a tunnel (10) positioned in the center of the floor, said hollow body comprising at least one technical element (6) and/or at least one fastening means (7) of said technical element (6) or of an internal vehicle fitting, said hollow body (5) being provided with at least one opening (8) that is positioned and dimensioned so as to allow said fastening means (7) and/or said technical element (6) to pass through the opening, **characterized in that** said tunnel (10) comprises a second fastening means (7') where the tunnel (10) has no hollow body (5).

2. Floor according to claim 1, wherein said opening (8) is carried by said upper skin (3).

3. Floor according to claim 1, wherein said opening (8) is carried by said lower skin (2).

4. Floor according to claim 2 or 3, wherein said opening (8) is provided with a closing element (9) for mechanically reinforcing the skin (2, 3) carrying the opening (8).

5. Floor according to claim 4, wherein said closing element (9) is attached to the skin (2, 3) carrying the opening (8) by at least one of the following means: gluing, riveting.

6. Floor according to one of the preceding claims, wherein said lower skin (2) is made of composite material.

7. Floor according to one of the preceding claims, wherein said upper skin (3) is made of composite material or metallic material.

8. Floor according to one of claims 4 to 7, wherein said closing element (9) is made of the same material as the skin (2, 3) carrying the opening.

9. Floor according to one of the preceding claims, wherein said hollow body (5) is located along a lateral edge of said floor (1).

10. Floor according to one of the preceding claims, wherein the hollow body (5) comprises two fastening means (7) for fastening said internal vehicle fitting, and the tunnel (10) comprises two fastening means (7') for fastening said internal vehicle fitting.

11. Floor according to one of the preceding claims, wherein the floor comprises two hollow bodies (5), each hollow body (5) supporting at least one fastening means (7).

12. Floor according to one of the preceding claims, wherein the upper skin (3) contributes with the lower skin (2) to the structural reinforcement of said floor (1).

13. Floor according to one of the preceding claims, wherein said internal fitting is a seat or a seat belt buckle.

14. Floor according to one of the preceding claims, wherein said technical element (6) is a structural reinforcement means, padding or a battery pack.
